# EUROPEAN PATENT APPLICATION

(11) **EP 2 677 632 A2**
(43) Date of publication of application: **25.12.2013**
(21) Application number: 13173110.1
(22) Date of filing: 20.06.2013
(51) Int. Cl.: H02K 1/27

(54) **Rotor with surface mounted magnets**

(30) Priority: 22.06.2012 KR 20120067328
(71) Applicant: LG Innotek Co., Ltd., Seoul 100-714 (KR)
(72) Inventor: Park, Kyung Sang, 100-714 Seoul (KR)
(74) Representative: Novagraaf Technologies

(57) **Abstract**

Disclosed is a rotor (120) and a motor (100) having the rotor (120), the motor (100) including a rotor (120) including a rotor core (126) including a body (127) centrally formed with a rotation shaft hole (127a), at least two first disengagement prevention units (128) protruded to a radially external side along a periphery of the body (127), and a second disengagement prevention unit (129) mounted to a circumferential direction of the body from each distal end of the first disengagement prevention units (128), and two or more magnets including a rear surface (123) contacting the body (127) of the rotor core (126), a lateral surface (124) contacting the first disengagement prevention unit (128) and a front surface (122) contacting the second disengagement prevention unit (129), a rotation shaft (130) coupled to the rotation shaft hole (127a), and a stator core (142) and a coil (144) wound on the stator core (142) for rotating the rotor (120).

## Description

### BACKGROUND OF THE DISCLOSURE

### 1. Field of the Disclosure

The present disclosure relates to a motor having a structure-improved rotor.

### 2. Discussion of the Related Art

In general, a motor is an apparatus converting an electric energy to a rotary power, and includes a rotor rotating with a rotation shaft and a stator wrapping an ambient of the rotor.

The rotor includes a rotor core and a magnet fixed to the rotor core, and the stator includes a stator core and a coil wound on the stator core.

The rotor is rotated relative to the stator by a magnetic force generated by the magnet fixed to the rotor core and by attractive force or repulsive force generated from an electromagnetic field generated by the coil wound on the stator core.

Magnets mounted on a periphery of the rotor core of the rotor rotating at a super high speed receive a great centrifugal force by the rotary force of the rotor, where if the magnets are not securely fixed to the periphery of the rotor core, the magnets may be disadvantageously disengaged from the rotor core.

Recently, a technique has been developed in which a hitching staircase is artificially formed at a part of the magnet mounted at the periphery of the rotor core, and the magnet is mounted on the periphery of the rotor core using the hitching staircase.

However, in a case a magnet is artificially formed with a hitching staircase and the magnet is fixed to a rotor core using the hitching staircase, stress is concentrated on a part of the magnet where the hitching staircase is formed to crack the magnet and to generate a chip on the magnet due to fallen part of the magnet.

Another disadvantage is that noise is generated and rotary force of the rotor decreases due to the chip generated by the fallen part of the magnet.

### BRIEF SUMMARY

The present disclosure is directed to cope with the abovementioned problems/disadvantages and it is an object of the present disclosure to provide a rotor configured to restrict or prevent cracks on a magnet and generation of chips by the cracks by securely fixing the magnet, and a motor having the rotor.

In one general aspect of the present disclosure, there is provided a rotor, the rotor comprising:
a rotor core including a body centrally with a rotation axis hole, at least two first disengagement prevention units protruded to a radially external side along a periphery of the body, and a second disengagement prevention unit mounted to a circumferential direction of the body from each distal end of the first disengagement prevention units; and
two or more magnets including a plate-shaped rear surface contacting the body of the rotor core, a lateral surface contacting the first disengagement prevention unit and a front surface contacting the second disengagement prevention unit.

Preferably, but not necessarily, a first curved unit may be at an area connected by the front surface and both lateral surfaces of the magnet, and an extensive area extended from the first disengagement prevention units to the second disengagement prevention unit may have a curvature corresponding to that of the first curved unit.

Preferably, but not necessarily, the body, the first disengagement prevention units and the second disengagement prevention unit may be integrated.

Preferably, but not necessarily, the first disengagement prevention units and the second disengagement prevention unit may be integrated and coupled to the body in a sliding method.

In another general aspect of the present disclosure, there is provided a motor, the motor comprising:
a rotor including a rotor core including a body centrally with a rotation shaft hole, at least two first disengagement prevention units protruded to a radially external side along a periphery of the body, and a second disengagement prevention unit mounted to a circumferential direction of the body from each distal end of the first disengagement prevention units, and two or more magnets including a rear surface contacting the body of the rotor core, a lateral surface contacting the first disengagement prevention unit and a front surface contacting the second disengagement prevention unit;
a rotation shaft coupled to the rotation shaft hole; and
a stator core and a coil wound on the stator core for rotating the rotor.

Preferably, but not necessarily, the rotation shaft may be coupled with the one rotor core.

Preferably, but not necessarily, the rotation shaft may be coupled with a plurality of said rotor cores and each core unit of the rotor cores may be alternatively arranged from the other core unit.

Preferably, but not necessarily, a first curved unit may be an area connected by the front surface and both lateral surfaces of the magnet, and a second curved unit having a curvature corresponding to that of the first curved unit may be an area extended from the first disengagement prevention unit to the second disengagement prevention unit.

Preferably, but not necessarily, the body, the first disengagement prevention units and the second disengagement prevention unit may be integrated.

Preferably, but not necessarily, the first disengagement prevention units and the second disengagement prevention unit may be integrated, and the integrated first disengagement prevention units and the second disengagement prevention unit may be coupled to the body in a sliding method.

In an advantageous effect, a rotor and a motor having the same according to exemplary embodiments of the present disclosure can prevent a magnet of the rotor from being disengaged from a rotor core, noise and decrease in rotary force caused by cracks on the magnet and generation of chips by the cracks caused by vibration and shock applied to the rotor can be prevented and a gap between a stator and the rotor can be reduced.

### BRIEF DESCRIPTION OF THE DRAWINGS

FIG.1 is a partially cut-out cross-sectional perspective view illustrating a motor according to an exemplary embodiment of the present disclosure.
FIG.2 is an exploded perspective view of a rotor of FIG.1.
FIG.3 is an assembled perspective view of a rotor of FIG.2.
FIG. 4 is a partial enlarged view of an 'A' portion of FIG.3.
FIG. 5 is a partially cut-out cross-sectional perspective view illustrating a motor according to another exemplary embodiment of the present disclosure.

### DETAILED DESCRIPTION

Now, a rotor and a motor having the same according to the exemplary embodiment of the present disclosure will be described in detail with reference to the accompanying drawings.

In describing the present disclosure, detailed descriptions of constructions or processes known in the art may be omitted to avoid obscuring appreciation of the invention by a person of ordinary skill in the art with unnecessary detail regarding such known constructions and functions. In the drawings, the size and relative sizes of layers, regions and/or other elements may be exaggerated or reduced for clarity. Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification.

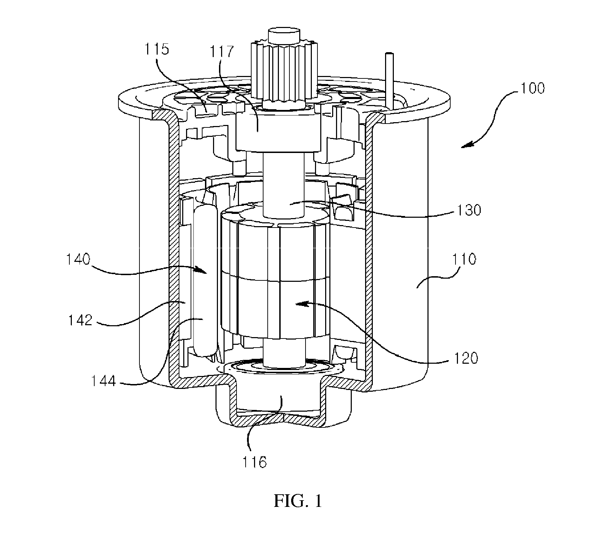

Referring to FIG.1, a motor (100) may be an electric steering motor connected to a steering axis connected to a steering wheel for easy manipulation of a vehicle, for example.

The motor (100) includes a rotor (120), a rotation shaft (130) and a stator (140). In addition, the motor (100) may further include a housing (110) and a housing cover (115).

The housing (110) and the housing cover (115) functions to accommodate the rotor (120) of the motor (100) and the stator (140), and the housing (110) and the housing cover (115) functions to rotatably fix the rotation shaft (130).

The housing (110) takes a shape of an upper surface-opened cylinder, and the housing (110) may be formed with an upper surface-opened cylinder, for example.

The housing cover (115) covers an upper surface of the upper-surface opened housing (110).

A bottom surface of the housing (110) and a center of the housing cover (115) are arranged with bearings (116, 117), and the bearings (116, 117) are coupled by both distal ends of the rotation shaft (130). The rotation shaft (130) is rotatably coupled to the housing (110) and the housing cover (115) respectively.

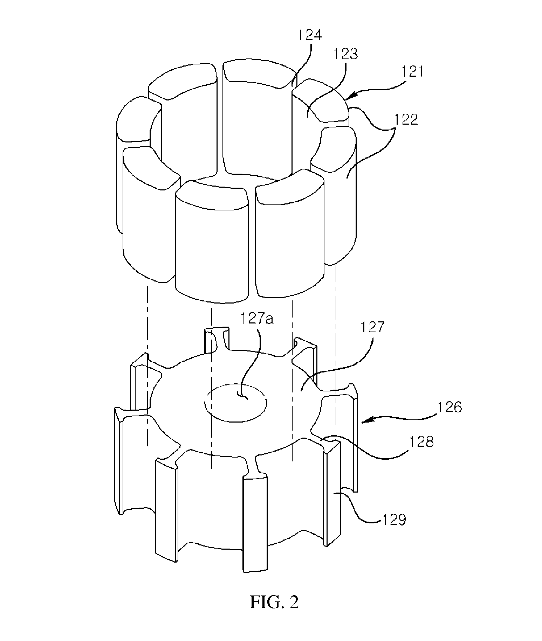

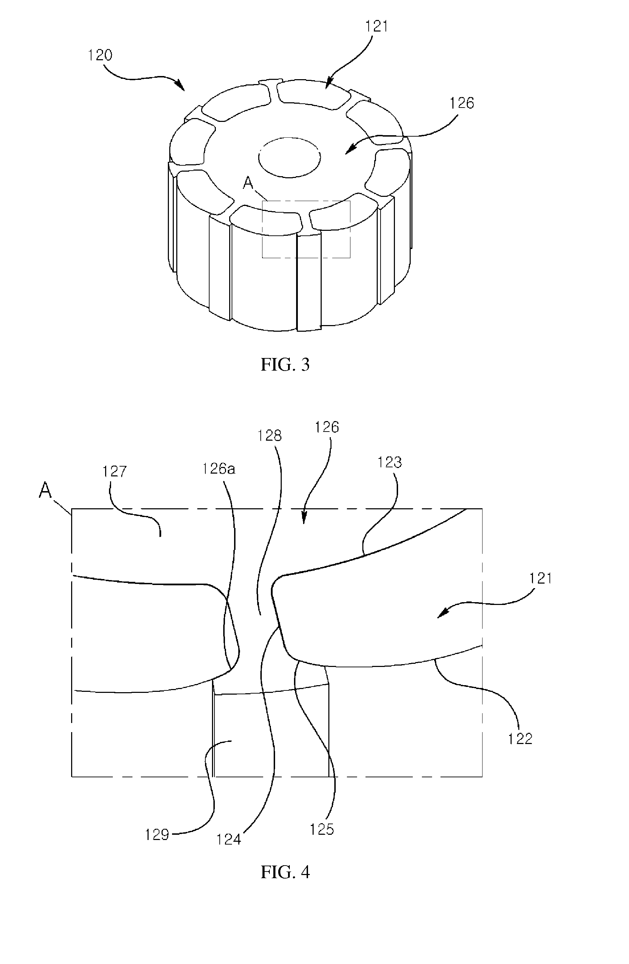

Referring to FIGS.2, 3 and 4, the rotor (120) includes a plurality of magnets (121) and a rotor core (126).

The magnet (121) takes a shape of a plate. For example, the magnet (121) takes a shape of a flat plate or a curved plate. In the exemplary embodiment of the present disclosure, the magnet (121) takes a shape of a curved plate.

Hereinafter, a surface of the magnet opposite to a body (127) of the rotor core (126, described later) is defined as a rear surface (123), a surface opposite to the rear surface (123) is defined as a front surface (122), and a pair of surfaces mutually connecting the rear surface (123) and the front surface (122) is defined as a lateral surface (124).

The rear surface (123) of the magnet (121) is formed with a curved concave surface, and the rear surface (123) is formed with a curvature substantially same as that of the rotor core (126, described later).

The front surface (122) of the magnet (121) may be formed with a convex curved surface.

Each of the pair of lateral surfaces of the magnet (121) is formed with a flat surface.

In the exemplary embodiment of the present disclosure, a first curved unit (125) is particularly formed between the pair of lateral surfaces (124) and the front surface (122).

Each first curved unit (125) of the magnet (121) restricts or prevents generation of cracks from the magnet (121) and generation of chips caused by generation of cracks due to vibration and shock applied from outside while the magnet (121) and the rotor core (126, described later) are brought into contact.

In the exemplary embodiment of the present disclosure, in a case the first curved unit (125) is alternatively formed in a shape of chamfer or a hitching staircase, a stress is concentrated on an area formed by the rotor core (126, described later) and the magnet (121) or on an area formed by the rotor core (126) and the hitching staircase of the magnet (121) to cause the magnet to easily generate cracks or to generate lots of chips caused by the cracks.

Furthermore, noise may be generated by the chips generated inside the motor (100) or the rotary force of the motor (100) may be decreased.

Thus, in the exemplary embodiment of the present disclosure, a corner area joined by the lateral surfaces (124) and the front surface (122) of the magnet (121) is formed with a first curved unit (125) to restrict or prevent the generation of cracks and chips on the magnet (121).

A plurality of circular magnets is arranged on a periphery of the rotor core (126), and in the exemplary embodiment of the present disclosure, a total of eight magnets (121) are formed on the periphery of the rotor core (126), and a gap is formed between each of the magnets (121).

The rotor core (126) may be formed by stacking a plurality of silicone plates, each having a thin thickness, and an overall look of the rotor core (126) may take a shape of a cylinder.

The rotor core (126) includes a body (127), a first disengagement prevention unit (128) and a second disengagement prevention unit (129). In the exemplary embodiment of the present disclosure, one rotor core (126) is coupled to the rotation shaft (130), for example.

The body (127), the first disengagement prevention unit (128) and the second disengagement prevention unit (129) may be integrally formed. Alternatively, the first and second disengagement prevention units (128, 129) may be integrally formed, and the first disengagement prevention unit (128) and the body (127) may be coupled together in a sliding method.

The body (127) may take a shape of a cylinder, and the body (127) is centrally formed with a rotation shaft hole (127a) passing through an upper surface of the body (127) and a bottom surface opposite to the upper surface, and the rotation shaft hole (127a) may be coupled to the rotation shaft (130) by way of press-fitting method.

The first disengagement prevention unit (128) is protruded to a radially external side along a periphery of the body (127).

The first disengagement prevention unit (128) is protruded from the periphery of the body (127) in a shape of a rib, and protruded between a gap formed by the circularly arranged magnets (121).

Both lateral surfaces of the first disengagement prevention unit (128) protruded between the pair of magnets (121) are brought into contact with lateral surfaces (124) of the pair of magnets (121) arranged at both sides of the first disengagement prevention unit (128).

In the exemplary embodiment of the present disclosure, the magnets (121) are prevented from moving relative to the rotor core (126) to additionally prevent generation of cracks of the magnets (121) or destruction caused by the cracks, because each of both the lateral surfaces of the first disengagement prevention unit (128) is brought into contact with each of the lateral surfaces (124) of the magnets (121).

The second disengagement prevention unit (129) is installed at a distal end of the first disengagement prevention unit (128) to a circumferential direction of the body (127). That is, the second disengagement prevention unit (129) is extended toward the front surface (122) of the pair of magnets (121) arranged at both sides of the first disengagement prevention unit (128), and the second disengagement prevention unit (129) prevents the magnets (121) from being disengaged from the rotor core (126) by pressing the first curved unit (125) of the magnets (121).

In the exemplary embodiment of the present disclosure, an area extended from the first disengagement prevention unit (128) to the second disengagement prevention unit (129) is formed with a second curved unit (126a) closely contacting the first curved unit (125) of the magnet (121).

The second curved unit (126a) is formed with a same curvature as that of the first curved unit (125), whereby the first and second curved units (125, 126a) of the magnet (121) are mutually surface-contacted.

Hence, the magnet (121) is securely fixed to the rotor core (126) to restrict or prevent generation of cracks on the magnet (121) and generation of chips caused by the cracks of the brittle magnet (121) due to relative movement of the magnet (121) and the rotor core (126).

Referring to FIG.1 again, the stator (140) includes a stator core (142) and a coil (144). Each of stator cores of the stator core (142) takes a radially protruded shape, the stator core (142) is wound with the coil (144), and the stator core (142) is fixed to an inner surface of the housing (110) by way of press-fitting method.

In the exemplary embodiment of the present disclosure thus described, the gap formed between the stator (140) and the rotor (120) can be reduced by approximately 20% to approximately 50%.

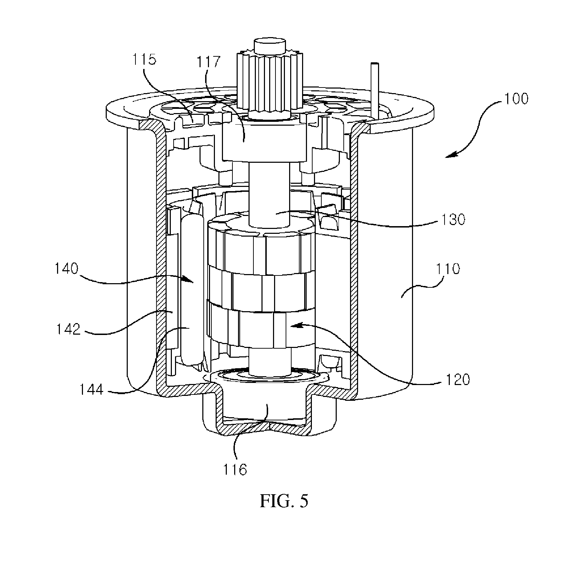

FIG. 5 is a partially cut-out cross-sectional perspective view illustrating a motor according to another exemplary embodiment of the present disclosure.

The motor of FIG. 5 is substantially same as that of FIGS. 1 to 4 in terms of configuration except for the number of rotor cores of the rotor and arrangement thereof. Thus, like reference numerals are used for like and corresponding parts, and explanations overlapping those in FIGS. 1 to 4 will be omitted.

Referring to FIG.5, the motor (100) includes a rotor (120), a rotation shaft (130) and a stator (140). In addition, the motor (100) may further include a housing (110) and a housing cover (115).

At least two, preferably three magnets (121) and at least two, preferably three rotor cores (126) fixed by the magnets (121) may be arranged, and each magnet (121) of the plurality of rotor cores (126) serially coupled to one rotation shaft (130) may be alternatively arranged from the other magnet (121).

As apparent from the foregoing, a rotor and a motor having the same according to exemplary embodiments of the present disclosure can advantageously prevent a magnet of a fast-rotating rotor from being disengaged from a rotor core, noise and decrease in rotary force caused by cracks on the magnet and generation of chips by the cracks caused by vibration and shock applied to the rotor can be prevented and a gap between a stator and the rotor can be reduced.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

## Claims

1. A motor (100) including a rotor core, a rotor (120) including a magnet fixed to the rotor core, a stator (140) including a stator core and a coil wound on the stator core, and a rotation shaft rotated by the rotor (120), the motor **characterized by**: a rotor core (126) including a body (127) centrally with a rotation shaft hole (127a), at least two first disengagement prevention units (128) protruded to a radially external side along a periphery of the body (127), and a second disengagement prevention unit (129) mounted to a circumferential direction of the body from each distal end of the first disengagement prevention units (128), and two or more magnets including a rear surface (123) surface-contacting the body (127) of the rotor core (126), a lateral surface (124) surface-contacting the first disengagement prevention unit (128) and a front surface (122) surface-contacting the lateral surface (124) surface-contacting the first disengagement prevention unit (128) and the second disengagement prevention unit (129);
a rotation shaft (130) coupled to the rotation shaft hole (127a); and
a stator core (142) and a coil (144) wound on the stator core (142) for rotating the rotor.

2. The motor of claim 1, **characterized in that** the rotation shaft (130) is coupled to one or more rotor cores (126).

3. The motor of claim 1, **characterized in that** the rotation shaft (130) is coupled with a plurality of said rotor cores (126) and each core unit of the rotor cores (126) is alternatively arranged from the other core unit.

4. The motor of claim 1, **characterized in that** a first curved unit (125) is an area connected by the front surface (122) and both lateral surfaces (124) of the magnet (121), and a second curved unit (126a) having a curvature corresponding to that of the first curved unit (125) is an area extended from the first disengagement prevention unit (128) to the second disengagement prevention unit (129).

5. The motor of claim 1, **characterized in that** the body (127), the first disengagement prevention units (128) and the second disengagement prevention unit (129) are integrated.

6. The motor of claim 1, **characterized in that** the first disengagement prevention units (128) and the second disengagement prevention unit (129) are integrated and coupled to the body in a sliding method.
